# EUROPÄISCHE PATENTSCHRIFT

(11) **EP 0 924 319 B1**
(45) Veröffentlichungstag und Bekanntmachung des Hinweises auf die Patenterteilung: **13.08.2008**
(21) Anmeldenummer: 98121432.3
(22) Anmeldetag: 11.11.1998
(51) Int. Cl.: C25D 5/12, C25D 15/02, F16J 9/00

(54) **Verfahren zur Herstellung eines Ölabstreifkolbenrings**
Process for manufacturing a piston oil scraping ring
Procédé de fabrication d'une bague racleuse de piston

(30) Priorität: 28.11.1997 DE 19752720
(43) Veröffentlichungstag der Anmeldung: 23.06.1999
(73) Patentinhaber: Federal-Mogul Burscheid GmbH, 51399 Burscheid (DE)
(72) Erfinder: Preyer, Karlfried, 42929 Wermelskirchen (DE)

(56) Entgegenhaltungen:
- EP-A- 0 217 126
- PATENT ABSTRACTS OF JAPAN Bd. 008, Nr. 267 (M-343), 7. Dezember 1984 (1984-12-07) & JP 59 138758 A (TOYOTA JIDOSHA KK), 9. August 1984 (1984-08-09)

## Beschreibung

Die Erfindung betrifft ein Verfahren zur Herstellung eines Ölabstreifkolbenringes mit mindestens einem an der Zylinderwand anliegenden Steg, wobei auf der äußeren Umfangsfläche eine verschleißfeste Schicht aufgebracht und die Schicht zur Bildung scharfer Kanten an den Stegen geschliffen wird.

Ölabstreifkolbenringe einer Hubkolben-Maschine haben die Aufgabe, einen für die Schmierung der Laufbahn der oberen Kolbenringe (Kompressionskolbenringe) gerade noch ausreichenden Ölfilm auf der Zylinderwand zu verteilen und den Rest des Öles dem Kurbelraum zurückzuführen. Eine wesentliche Forderung, die an einen Ölabstreifkolbenring gestellt wird, ist in erster Linie die Einhaltung einer von der Zylinderform unabhängigen, über den Umfang gleichbleibenden Flächenpressung zwischen der Lauffläche und der Zylinderwand.

Ölabstreifkolbenringe mit einem an der Zylinderwand anliegenden schmalen Steg, unterliegen während des Betriebes einer hohen Flächenpressung, deswegen werden die Laufflächen dieser Ringe üblicherweise mit einer verschleißfesten Schicht versehen. Aus der EP 0 507 636 B1 ist ein solcher gattungsgemäßer Ölabstreifkolbenring zu entnehmen. Der Kolbenring weist äußerst schmale Stege auf, so daß die Flächenpressung des Ringes sehr hoch ist Da die üblicherweise bei derartigen Ringen verwendete verschleißfeste Schicht in Form einer Verchromung den Anforderungen nicht mehr gewachsen war, wurden die Stege durch Nitirierung gehärtet.

Je nach Motortyp, Betriebsweise, Ölsorte etc., können derartige Ölabstreifkolbenringe Laufleistungen in Kraftfahrzeugen von 400 000 km erreichen. Aus der allgemeinen Tendenz, vor allem mit Dieselmotoren Laufzeiten von 1 Mio. km und mehr zu ereichen, wurden bereits für Kompressionskolbenringe besonders verschleißfeste Schichten entwickelt wie sie aus der EP 0 217 126 B1 bekannt sind. Die verschleißfeste Schicht enthält im gesamten Schichtvolumen festverankert keramische Partikel, die der Schicht eine äußerst hohe Belastbarkeit und Verschleißfestigkeit bescheren. Das Aufbringen einer solchen Schicht auf gattungsgemäße Ölabstreifkolbenringe war bisher nicht möglich, da die Ölabstreifkolbenringe nach dem Aufbringen einer verschleißfesten Schicht geschliffen werden müssen, um eine scharfe Kante zu erhalten, welche zur guten Abstreifwirkung unerläßlich ist. Da das Schleifen der Schicht zu Ausbrüchen der keramischen Partikel führte, konnte bisher die an sich bekannte Schicht nicht für in Rede stehende Ölabstreifkolbenringe verwendet werden.

Der Erfindung liegt die Aufgabe zugrunde, eine an sich bekannte verschleißfeste Schicht für Ölabstreifkolbenringe einzusetzen, um die Laufleistung gattungsgemäßer Ölabstreifkolbenringe zu verbessern.

Diese Aufgabe wird erfindungsgemäß durch die kennzeichenden Merkmale des Patentanspruchs 1 gelöst. Vorteilhafte Ausgestaltungen der Erfindung sind in den Unteransprüchen dargelegt. Mit dem erfindungsgemäßen Verfahren wird ein Ausbrechen der Feststoffpartikel während des Schleifvorganges verhindert.
Je nach Anwendungsfall können verschiedene Materialien für die Deckschicht verwendet werden. Wird beispielsweise eine galvanische Hartchromschicht ohne keramische Partikel aufgebracht, so braucht die Deckschicht nicht vollkommen abgetragen zu werden. Der auf dem Ölabstreifkolbenring verbleibende Rest der Hartchromschicht fungiert dann ebenfalls als verschleißfeste Schicht. Ist nach einer gewissen Betriebszeit die Hartchromschicht abgetragen, so wird die darunter angeordnete zweite verbesserte Hartchromschicht mit eingelagerten Feststoffen aktiv. Auf diese Weise ist die Lebensdauer des Ölabstreifkolbenringes noch weiter verbessert.

Das erfindungsgemäße Verfahren wird im folgenden unter Bezugnahme auf die Zeichnungen naher erläutert. Es zeigt:
- Fig 1: Teilansicht eines erfindungsgemäßen Ölabstreifkolbenringes im Rohzustand
- Fig. 2: eine Teilansicht des Ölabstreifkolbenringes gemäß Fig. 1 während des Schleifvorganges
- Fig. 3: Fertigbearbeiteter Ölabstreifkolbenring im Teilschnitt

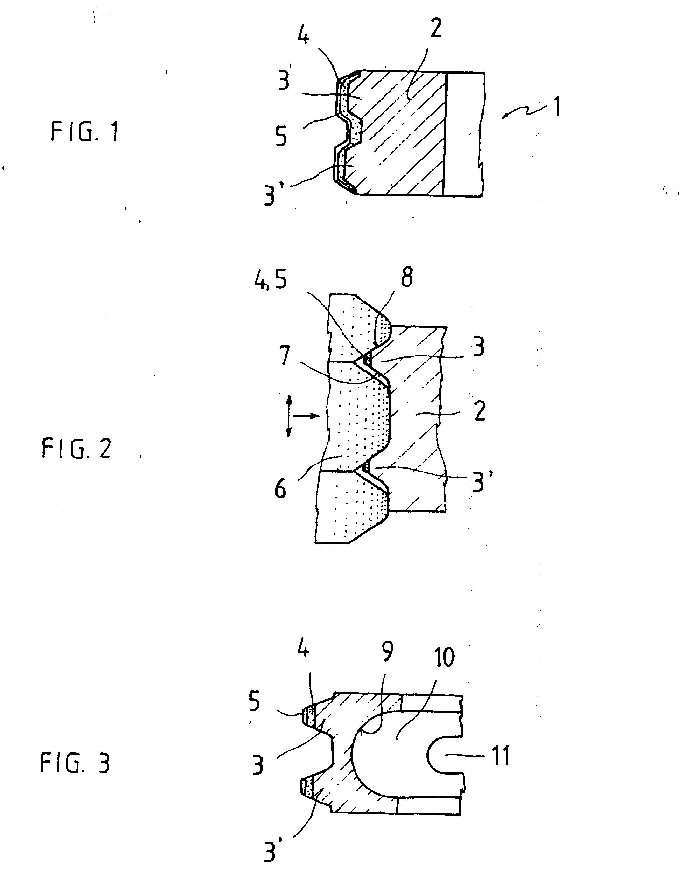

Der in Figur 1 dargestellte Ölabstreifkolbenring 1 besteht aus einem ringförmigen Grundkörper (2), vorzugsweise aus Gußeisen. Auf der äußeren Umfangsfläche sind zwei an der Zylinderwand (nicht dargestellt) anliegende Stege (3, 3') angeordnet.

Auf der äußeren Umfangsfläche ist eine an sich bekannte galvanische Hartchromschicht (4) mit eingelagerten Feststoffpartikeln aufgebracht. Über die Hartchromschicht (4) wird eine ausbruchsichere Deckschicht (5) galvanisiert. Die Deckschicht (5) kann beispielsweise eine galvanische Hartchromschicht ohne Feststoffpartikel sein.

Nach dem Aufbringen der Hartchrom- und Deckschicht (4, 5) wird die äußere Umfangsfläche mit einer profilierten Schleifscheibe (6) derart bearbeitet, daß die Stege (3, 3') an den Flanken (7, 8) geschliffen werden. Deckschicht (5) wird dabei vollkommen abgetragen

Die Schleifscheibe (6) ist so profiliert, daß auf der äußeren Umfangsfläche der Stege (3, 3') kein Materialabtrag erfolgt. Es ist jedoch möglich, auch die äußeren Stegflächen von der Deckschicht (5) zu befreien. Die zwischen den Stegen (3, 3') aufgetragene Hartchromschicht (4) kann ebenfalls abgetragen werden.

Die Figur 3 zeigt einen fertigen nach dem erfindungsgemäßen Verfahren hergestellten Ölabstreifkolbenring. Auf der inneren Umfangsfläche (9) wurde eine Ausnehmung (10) zur Aufnahme einer Feder eingedreht. Überdies weist der Ölabstreifkolbenring über den Umfang verteilt eine Vielzahl von Ölablauföffnungen (11) auf

## Patentansprüche

1. Verfahren zur Herstellung eines Ölabstreiflcolbenringes mit mindestens einem an der Zylinderwand anliegenden Steg, wobei auf der äußeren Umfangsfläche eine verschleißfeste Schicht aufgebracht und die Schicht zur Bildung scharfer Kanten an den Stegen geschliffen wird, **dadurch gekennzeichnet, daß** auf die äußere Umfangsfläche zunächst eine verschleißfeste galvanische Hartchromschicht (4) mit einem durch die gesamte Schichtdicke sich erstreckenden Rißnetzwerk mit in den Rissen eingelagerten Feststoffpartikeln abgeschieden und darauf eine ausbruchsichere Deckschicht (5) aufgebracht wird und danach die scharfen Kanten an den Flanken (7,8) der Stege (3, 3') fertiggeschliffen werden, indem die Deckschicht (5) vollkommen abgetragen wird.

2. Verfahren nach Anspruch 1, **dadurch gekennzeichnet, daß** die Hartchromschicht (4) zwischen den Stegen (3, 3') vollkommen abgetragen wird.

3. Verfahren nach den Ansprüchen 1 und 2, **dadurch gekennzeichnet, daß** die Deckschicht (5) galvanisch aufgebracht und aus Metallen gebildet ist, die aus einer Gruppe bestehend aus Kupfer, Zinn, Nickel, Chrom und Legierungen dieser Metalle ausgewählt sind.

4. Verfahren nach den Ansprüchen 1 bis 3, **dadurch gekennzeichnet, daß** die Schichtdicke der verschleißfesten Hartchomschicht (4) zwischen 0,01 und 1,0 mm liegt.

5. Verfahren nach den Ansprüchen 1 bis 4, **dadurch gekennzeichnet, daß** die Dicke der Deckschicht (5) mindestens 0,01 mm beträgt.

## Claims

1. Method for producing an oil scraping piston ring which comprises at least one web lying against the cylinder wall, wherein a wear-resistant layer is applied to the outer peripheral surface and the layer is ground on the webs to form sharp edges, **characterised in that** a wear-resistant galvanically hard-chromium plated layer (4) with a network of cracks extending throughout the whole layer and having solid material particles embedded in the cracks is initially deposited onto the outer peripheral surface, and a break-out-resistant cover layer (5) is applied thereon and then the sharp edges are ground onto the flanks (7, 8) of the webs (3, 3') where the cover layer (5) is completely removed.

2. Method according to claim 1, **characterised in that** the hard-chromium plated layer (4) is completely removed between the webs (3, 3').

3. Method according to claims 1 and 2, **characterised in that** the cover layer (5) is galvanically applied and is made from metals which are selected from the group comprising copper, tin, nickel, chromium and alloys of these metals.

4. Method according to claims 1 to 3, **characterised in that** the layer thickness of the wear-resistant hard-chromium plated layer (4) is in the range of 0.01 mm to 1.0 mm

5. Method according to claims 1 to 4, **characterised in that** the thickness of the cover layer (5) is at least 0.01 mm.

## Revendications

1. Procédé pour fabriquer un segment de piston racleur d'huile doté d'au moins une nervure appliquée contre la paroi du cylindre, une couche résistante à l'usure étant appliquée sur la surface périphérique extérieure, et la couche étant rectifiée à la meule pour conférer aux nervures des arêtes vives, **caractérisé en ce que**, dans un premier temps, l'on dépose par galvanoplastie, sur la surface périphérique extérieure, une couche de chrome dur (4) résistante à l'usure qui renferme un réseau de fissures s'étendant à travers toute l'épaisseur de la couche, fissures dans lesquelles sont incluses des particules solides, et **en ce que** l'on applique ensuite sur ladite couche une couche de recouvrement (5) anti-éclats, avant d'achever de rectifier les arêtes vives au niveau des flancs (7, 8) des nervures (3, 3') en enlevant entièrement la couche de recouvrement (5).

2. Procédé selon la revendication 1, **caractérisé en ce que** la couche de chrome dur (4) est entièrement enlevée entre les nervures (3, 3').

3. Procédé selon les revendications 1 et 2, **caractérisé en ce que** la couche de recouvrement (5) est appliquée par galvanoplastie et est constituée de métaux choisis parmi un groupe dans lequel figurent le cuivre, l'étain, le nickel, le chrome et des alliages desdits métaux.

4. Procédé selon les revendications 1 à 3, **caractérisé en ce que** l'épaisseur de la couche de chrome dur (4) résistante à l'usure est comprise entre 0,01 et 1,0 mm.

5. Procédé selon les revendications 1 à 4, **caractérisé en ce que** l'épaisseur de la couche de recouvrement (5) s'élève à au moins 0,01 mm.
